# EUROPEAN PATENT SPECIFICATION

(11) **EP 3 964 909 B1**
(45) Date of publication and mention of the grant of the patent: **07.08.2024**
(21) Application number: 20195054.0
(22) Date of filing: 08.09.2020
(51) Int. Cl.: G05D 1/00

(54) **METHODS, COMPUTER PROGRAMS, APPARATUSES FOR A VEHICLE AND A CONTROL CENTER FOR RESOLVING A DEADLOCK TRAFFIC SITUATION OF AN AUTOMATICALLY OPERATED VEHICLE**
VERFAHREN, COMPUTERPROGRAMME, VORRICHTUNGEN FÜR EIN FAHRZEUG UND EINE ZENTRALE ZUR LÖSUNG EINER VERKEHRSSITUATION MIT BLOCKIERUNG EINES AUTOMATISCH BETRIEBENEN FAHRZEUGS
PROCÉDÉS, PROGRAMMES INFORMATIQUES, APPAREILS POUR UN VÉHICULE ET UN CENTRE DE CONTRÔLE PERMETTANT DE RÉSOUDRE UNE SITUATION D'INTERBLOCAGE DE TRAFIC D'UN VÉHICULE AUTOMATIQUE

(43) Date of publication of application: 09.03.2022
(73) Proprietor: VOLKSWAGEN AG, 38440 Wolfsburg (DE)
(72) Inventor: Jornod, Guillaume, 10245 Berlin (DE); Pfadler, Andreas, 13357 Berlin (DE); Gonzalez Vazquez, Israel, 38442 Wolfsburg (DE)
(74) Representative: Gulde & Partner

(56) References cited:
- US-A1- 2019 196 464
- US-A1- 2020 209 846

## Description

The present invention relates to a vehicle, a control center, methods, computer programs, apparatuses, for a vehicle and for a control center for resolving a deadlock traffic situation of an automatically operated vehicle, more specifically, but not exclusively, to a concept for reusing information on a deadlock situation and information on resolving said deadlock situation.

Vehicular communication is a field of research and development. To enable an autonomous or semi-autonomous driving of vehicles, vehicles are expected to use Vehicle-to-Vehicle-communication (V2V) and Vehicle-to-Network (V2N) communication, e.g. to coordinate driving maneuvers and/or to receive tele-operated driving instructions. This communication is generally wireless, i.e. vehicles may wirelessly communicate with other vehicles in their vicinity and/or with backend services via cellular mobile communication systems.

Tele-operated driving (ToD) is getting more and more interest. The main concept of ToD is an automated vehicle (AV) remotely driven by a control/command center (CC). CC and AV may be far away from each other. They are connected via a radio communication system (e.g. 4^{th}, 5^{th} Generation mobile communication systems (4G, 5G)) and its backhaul. Therefore, a certain end-to-end (E2E) delay and data rate are to be expected. The CC controls the automated vehicle (AV) via remote control. In direct control the CC directly controls one or more actuators of the AV.

Tele-operated driving (ToD) might become a key technology in order to solve issues with L4/L5 (L4: highly automatic, L5: fully automatic) driven vehicles, such as interpretation issues or deadlocks (situations, which cannot be resolved by autonomous or automatic control mechanisms only). These issues occur when automatic driven vehicles (AV) are not able to interpret and to solve a situation (deadlock) due to not clear traffic conditions, e.g. an accident or a construction site. These vehicles may need external instruction from someone else to solve the situation, which can be the CC. A ToO vehicle will be driven remotely in a ToO session by a CC, an operator therein, respectively.

Document US 2020/0209846 A1 relates to a remote intervention system for the operation of a vehicle, which can be an autonomous vehicle, a vehicle that includes driver assist features, a vehicle used for ride sharing services or the like. The system includes a vehicle sending a request for remote intervention to a remote operator When the operation of the vehicle is suspended. The request for remote intervention can include a request for object identification or a request for decision confirmation. The vehicle can update vehicle operation based in part on vehicle-based sensor data and a response to the remote intervention request from the remote operator. The remote operator can be a human operator or an AI operator.

Document US 2019/196464 A1 relates to a teleoperator device that is configured to obtain a request for teleoperator assistance from a driverless vehicle and obtain teleoperator data in response to the request. The teleoperator device may also be configured to record at least some of the teleoperator input and/0r guidance transmitted to the driverless vehicle based on the teleoperator input. Upon receiving a sub sequent request, the teleoperator device may be configured to reproduce at least part of the former teleoperator input and/or to provide an option to activate guidance associated with the teleoperator input. The teleoperator device may also be configured to train a model and/or use a model to determine from vehicle data an option for presentation Via a teleoperator interface and/or a presentation configuration of the teleoperator interface.

Document US2018/0356814 A1 discloses an assignment system and a method, which determine time-variable risk profiles for separate vehicle systems that are remotely controlled by operators located off-board the vehicle systems. The time-variable risk profiles represent risks of the vehicle systems that change with respect to time. An operator staffing demand for the vehicle systems may be determined based on the time-variable risk profiles. The staffing demand represents how many operators are needed for remotely controlling the vehicle systems at different times and a required qualification of one or more operators. The system and method also assign operators to remotely monitor and/or control the vehicle systems based on the risk profiles and, optionally, the staffing demand. The operator assigned to one or more vehicle systems changes with respect to time while the vehicle systems are moving along routes.

Document JP2019175209 describes a remote support system that performs remote support for a vehicle and includes a remote support unit configured to remotely support the vehicle based on an operation by an operator when the vehicle arrives at a support point. The operation of the vehicle is supported from a remote place, or when a call request is received from the vehicle, and an allocation control unit configured to allocate an operator who is in charge of the remote support for the vehicle, among a plurality of operators, based on an adaptive value calculated based on each operator's experience.

Document US 2020/0062267 A1 relates to a system, which provides on-demand remote support services including teleoperation of vehicles. In response to a remote support request, the system assesses environmental conditions, historical data, and/or parameters of a request for remote support to rank available operators capable of fulfilling the request, and selects an optimal operator for the remote support request based on desired criteria.

The prior art concepts describe sharing information about the environment and remote support for vehicles. The information shared with a remote unit may include environmental information from sensors, messages exchanged between vehicles, about obstacles, etc. However, although improved environmental knowledge or models may also improve ToD, the automated vehicle still being in a deadlock situation, i.e. a situation that cannot be resolved by a vehicle alone, further information on the environment does not help improving a signaling or resource efficiency of an overlaying communication system or an efficiency of a signaling involved in tele-operating the vehicles out of the respective situations. Conventional concepts generate a significant amount of data traffic to enable remoted control of vehicles.

There is a demand for an improved concept to enable efficient communication for ToD of vehicles in deadlock situations. This demand is fulfilled according to the independent claims.

Embodiments are based on the finding that ToD information can be reused for vehicles in the same deadlock situation. When a CC is connected to an AV in order to solve a deadlock situation, a human operator may require some time to get a full understanding of the situation before being able to solve it. It can be foreseen that a computer would take over this task at the command center. Even artificial intelligence within a powerful computer might require further information in order to be able to solve such situations, e.g. video footage from infrastructure. If multiple AVs get blocked in the same deadlock situation, this situation-understanding-time becomes redundant. It is a finding that such information can be stored and reused by a CC. The deadlock situation itself may be identified by a reference location for the deadlock situation. AVs may then report the reference location and prior information on this deadlock situation can be identified, restored and reused. It is a further finding that a time stamp can be used to avoid reusing outdated information.

Embodiments provide a method for resolving a deadlock traffic situation in an automatically operated vehicle. The method comprises detecting the deadlock traffic situation and determining information on a reference location for the deadlock traffic situation. The method further comprises reporting the deadlock traffic situation with the information on the reference location for the deadlock traffic situation and a time stamp to a control center. The method further comprises entering a tele-operated driving session in coordination with the control center and resolving the deadlock traffic situation using tele-operation by the control center. In embodiments a total deadlock solving time and a resource consumption may be reduced by using the reference location in the report and thereby enabling a reuse of information that is already available of this deadlock situation.

For example, the information on the reference location of the deadlock traffic situation may comprise information of a location, which relates to the deadlock traffic situation and which is reproducible by a subsequent vehicle approaching the deadlock traffic situation. Hence, subsequent vehicles, which arrive at the same deadlock situation are enabled to reproduce the same information, e.g. by using a lane identifier and a road meter indicator.

In other embodiments the information on the reference location of the deadlock situation may comprise geographical coordinates identifying the deadlock traffic situation. Geographical coordinates may be available at almost all vehicles, e.g. using satellite-based positioning. When the deadlock situation is detected by the vehicle, e.g. using its internal sensors, geographical reference coordinates can be determined for the deadlock situation.

Embodiments also provide a method for resolving a deadlock traffic situation of an automatically operated vehicle at a control center. The method comprises receiving information requesting tele-operation support from the automatically operated vehicle. The information requesting the tele-operation support further comprises information on a reference location for the deadlock traffic situation. The method further comprises determining whether information on the deadlock traffic situation is already available and tele-operating the automatically operated vehicle out of the deadlock situation using the information on the deadlock traffic situation if already available. As outlined above, embodiments may enable a more efficient use of communication resources by reusing information, which has already been made available for resolving a deadlock traffic situation.

In some embodiments the method may further comprise generating and storing information on the deadlock traffic situation if it is not available. Embodiments may enable storing information on a deadlock situation for later reuse.

Moreover, information on a time indication may be stored with the information on the deadlock traffic situation. Such a time indication may enable an evaluation on whether an update is needed or not at a later point in time.

For example, the method may comprise storing the information on the deadlock traffic situation in a data base. The data base may be accessible from multiple CCs, e.g. CCs operated by different service providers or operators. Information available on certain deadlock situations may hence be made available for different operators.

The determining whether information on the deadlock traffic situation is available may comprise checking a data base for the information on the deadlock traffic situation. Hence, information determined by a different CC may be reused.

The checking of the data base may be based on the information on the reference location of the deadlock traffic situation. Efficient data base access may be enabled by using the reference location as identifier.

In some embodiments the method may further comprise determining a time stamp for the information received from the automatically operated vehicle and comparing the time stamp with a time indication of the information on the deadlock traffic situation to determine outdated information. Reuse of outdated information may be efficiently avoided in embodiments.

Moreover, the method may comprise updating the information on the deadlock traffic situation in case it is outdated by determining update information on the deadlock traffic situation in the tele-operated driving session. Embodiments may enable an efficient update of the information on the deadlock traffic situation.

An apparatus for resolving a deadlock traffic situation of a vehicle is another embodiment. The apparatus comprises one or more interfaces configured to communicate in a communication network and a control module configured to control the one or more interfaces. The control module is further configured to perform one of the methods described herein. Further embodiments are a vehicle and a control center comprising an embodiment of the apparatus.

Embodiments further provide a computer program having a program code for performing one or more of the described methods, when the computer program is executed on a computer, processor, or programmable hardware component. A further embodiment is a computer readable storage medium storing instructions which, when executed by a computer, processor, or programmable hardware component, cause the computer to implement one of the methods described herein.

Some other features or aspects will be described using the following non-limiting embodiments of apparatuses or methods or computer programs or computer program products by way of example only, and with reference to the accompanying figures, in which:
Fig. 1 illustrates a block diagram of an embodiment of a method for resolving a deadlock traffic situation in an automatically operated vehicle;
Fig. 2 illustrates a block diagram of an embodiment of a method for resolving a deadlock traffic situation of an automatically operated vehicle at a control center; and
Fig. 3 illustrates a block diagram of an apparatus for resolving a deadlock traffic situation of a vehicle, an embodiment of a vehicle, and an embodiment of a control center.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed or dotted lines.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes" or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

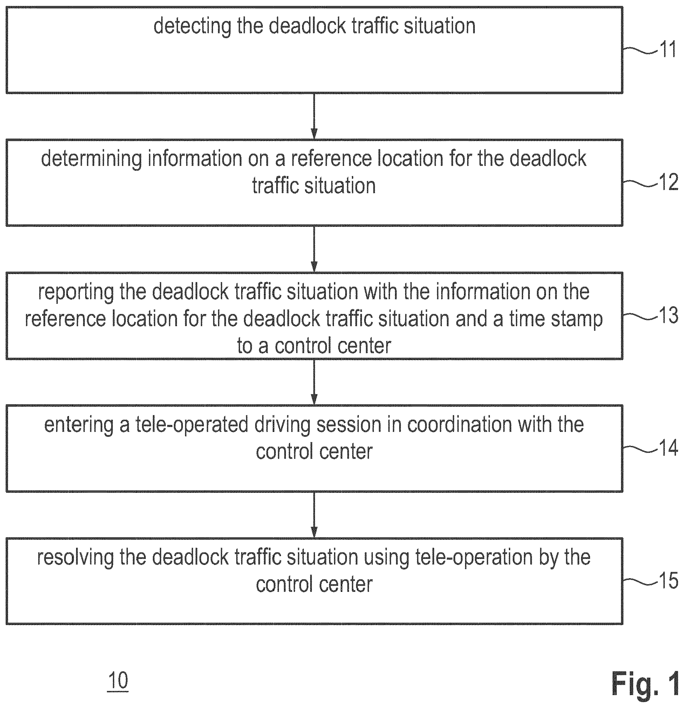

Fig. 1 illustrates a block diagram of an embodiment of a method 10 for resolving a deadlock traffic situation in an automatically operated vehicle. The method 10 comprises detecting 11 the deadlock traffic situation and determining 12 information on a reference location for the deadlock traffic situation. The method 10 further comprises reporting 13 the deadlock traffic situation with the information on the reference location for the deadlock traffic situation and a time stamp to a control center and entering 14 a tele-operated driving session in coordination with the control center. The method 10 further comprises resolving 15 the deadlock traffic situation using tele-operation by the control center.

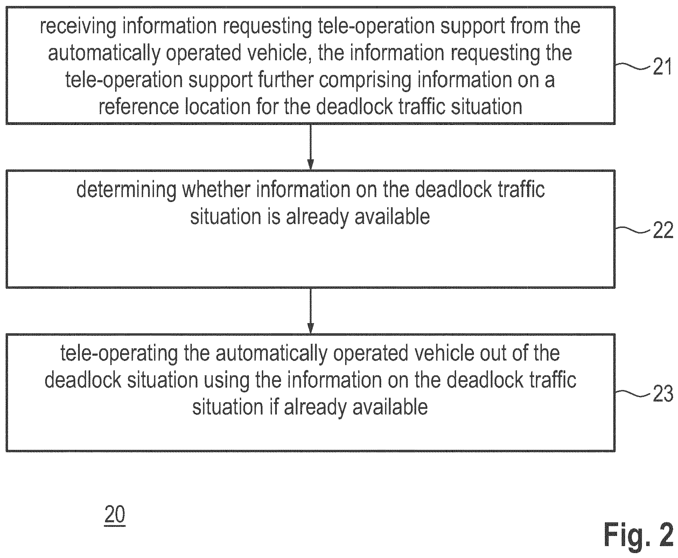

Fig. 2 illustrates a block diagram of an embodiment of a method 20 for resolving a deadlock traffic situation of an automatically operated vehicle at a control center. The method 20 comprises receiving 21 information requesting tele-operation support from the automatically operated vehicle. The information requesting the tele-operation support further comprises information on a reference location for the deadlock traffic situation. The method 20 further comprises determining 22 whether information on the deadlock traffic situation is already available and tele-operating 23 the automatically operated vehicle out of the deadlock situation using the information on the deadlock traffic situation if already available.

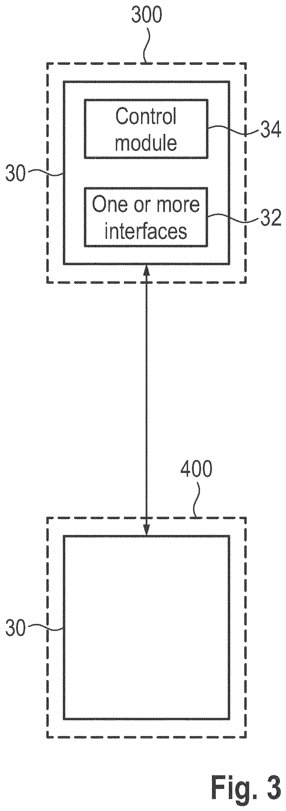

Fig. 3 illustrates a block diagram of an apparatus 30 for resolving a deadlock traffic situation of a vehicle 300, an embodiment of a vehicle 300, and an embodiment of a control center 400. The apparatus 30 for resolving a deadlock traffic situation of a vehicle 300 comprises one or more interfaces 32 configured to communicate in a communication network and a control module 34, which is coupled to the one or more interfaces 32, and which is configured to control the one or more interfaces 32. The control module 34 is further configured to perform one of the methods 10, 20 as described herein. Another embodiment is a vehicle 300 comprising the apparatus 30. Yet another embodiment is a control center 400 comprising the apparatus 30. As indicated in Fig. 3 using broken lines, the vehicle 300 and the control center 400 are optional from the perspective of the apparatus 30.

Embodiments may provide a method to help automated vehicles in a deadlock situation. Tele-operating the vehicle is to be understood as a remote operation of the vehicle. For example, a remote operator or tele-operator located at a control center (CC) takes over control of the vehicle by means of control commands (e.g. acceleration/deceleration commands, steering commands, etc.).

Such a deadlock situation may be detected by the vehicle 300 using onboard sensor systems. Such sensor information may also be used to develop an environmental model for the vehicle 300. There are multiple options on determining the environmental information in embodiments. For example, information related to the environment may be obtained by means of sensor data of the vehicle itself (video, radar, lidar, etc.) or through communication with other vehicles, e.g. Vehicle-to-Vehicle (V2V, Car-to-Car) communication. Information related to the environment may comprise determining the information related to the environment based on sensor data shared among vehicles in the environment of the vehicle (data from sensors of other vehicles).

The ToO performance is related to the communication link performance. The communication link may comprise a wireless part and wired part and a Quality of Service (QoS) may relate at least to the wireless part in some embodiments. For example, the communication link comprises the air interface (Uu link in 3GPP (3rd Generation Partnership Project), wireless part of the communication link) between the vehicle and the base station (access node) and then the connection through the operator backbone (core network, wired part). Depending on the quality of the link, the control of the vehicle will be adapted in embodiments: the vehicle will be controlled directly (joystick-like) or indirectly (waypoints, or environmental model editions). The environment may be characterized by the type of road, e.g. highway, country road, city road, residential area road, number of lanes, traffic density, traffic dynamics, etc. Moreover, the time of day, the day of week, the weather, current traffic condition/density; and other factors may be comprised in the information related to the environment of the tele-operated vehicle. Communicating all this information may consume significant bandwidth and radio capacity.

In embodiments, the information on the reference location of a deadlock situation may enable to identify the same deadlock situation for another vehicle. Identifying the same deadlock situation may enable reuse of information for resolving the deadlock situation. For example, the information on the reference location be an identifier number, which identifies a certain road section in a lane of a road.

For example, multiple vehicles arrive subsequently at the same deadlock situation, e.g. an accident or a road construction. If all vehicles enter a ToO session once they arrive at the deadlock situation a significant communication overhead occurs as all vehicles communicate the same information to their CCs. The later arriving vehicles are then moved out of the deadlock situation one by one in subsequent independent ToO sessions.

In embodiments, the forwarding of the information on the reference location allows subsequent vehicles to make reference to the deadlock situation. This reference may allow a CC to identify the deadlock situation and make reuse of former information regarding the deadlock situation itself (accident, construction, blocking vehicle, pedestrian on the street, etc.) and information for resolving the deadlock situation, e.g. trajectory, alternative routes, waypoints, etc.

In embodiments the information on the reference location of the deadlock traffic situation comprises information of a location, which relates to the deadlock traffic situation and which is reproducible by a subsequent vehicle approaching the deadlock traffic situation. For example, such information may be the above identifier. In another embodiment the information on the reference location of the deadlock situation comprises geographical coordinates identifying the deadlock traffic situation. Geographical coordinates can also be reproducible, e.g. a point at which any automated vehicle, is able to identify the deadlock traffic situation.

Furthermore, the method 20 may further comprise generating and storing information on the deadlock traffic situation if it is not available. That way, such information can be made available for subsequent or later requests relating to the same deadlock traffic situation. In further embodiments, the method 20 may comprise storing information on a time indication with the information on the deadlock traffic situation. The time indication may enable to determine whether stored information is outdated or not. Different deadlock traffic situations may have different outdating settings or different validity times. A truck unloading goods may be expected to move on soon and a closed road lane due to road surface damages may last longer.

In some embodiments the information on the deadlock traffic situation may be stored in a data base. E.g. a server on the internet, a data storage, the cloud, etc. The data base may be accessible by multiple CCs, hence one CC may benefit from information that has already been determined by another CC. The determining 22 whether information on the deadlock traffic situation is available, may comprise checking a data base for the information on the deadlock traffic situation.

For example, the information on the reference location is used to identify a former tele-operation session of a specific control center. Hence, in some embodiments a CC may be identified at the vehicle and a ToD request may then be directed to said CC. The CC may then identify another CC based on the reference location of the deadlock. Information on the ToD session (deadlock situation) may then be retrieved from the other CC or the other CC may be put in charge for the ToO session of the requesting vehicle.

The apparatus 30 and the vehicle 300 or control center 400 may communicate at least partly through a mobile communication system. The mobile communication system, may, for example, correspond to one of the Third Generation Partnership Project (3GPP)-standardized mobile communication networks, where the term mobile communication system is used synonymously to mobile communication network. The messages (input data, control information) may hence be communicated through multiple network nodes (e.g. internet, router, switches, etc.) and the mobile communication system, which generates the delay or latencies considered in embodiments. For example, the uplink direction refers to the direction from a vehicle to the command center and the downlink direction refers from the command center to the vehicle.

The mobile or wireless communication system may correspond to a mobile communication system of the 5th Generation (5G, or New Radio) and may use mm-Wave technology. The mobile communication system may correspond to or comprise, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

Service provision may be carried out by a network component, such as a base station transceiver, a relay station or a UE, e.g. coordinating service provision in a cluster or group of multiple UEs/vehicles. A base station transceiver can be operable or configured to communicate with one or more active mobile transceivers/vehicles and a base station transceiver can be located in or adjacent to a coverage area of another base station transceiver, e.g. a macro cell base station transceiver or small cell base station transceiver. Hence, embodiments may provide a mobile communication system comprising two or more mobile transceivers/vehicles and one or more base station transceivers, wherein the base station transceivers may establish macro cells or small cells, as e.g. pico-, metro-, or femto cells. A mobile transceiver or UE may correspond to a smartphone, a cell phone, a laptop, a notebook, a personal computer, a Personal Digital Assistant (PDA), a Universal Serial Bus (USB) -stick, a car, a vehicle, a road participant, a traffic entity, traffic infrastructure etc. A mobile transceiver may also be referred to as User Equipment (UE) or mobile in line with the 3GPP terminology. A vehicle may correspond to any conceivable means for transportation, e.g. a car, a bike, a motorbike, a van, a truck, a bus, a ship, a boat, a plane, a train, a tram, etc.

A base station transceiver can be located in the fixed or stationary part of the network or system. A base station transceiver may be or correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a gNodeB, a Base Transceiver Station (BTS), an access point, a remote radio head, a relay station, a transmission point, etc., which may be further subdivided in a remote unit and a central unit.

A mobile transceiver or vehicle can be associated with a base station transceiver or cell. The term cell refers to a coverage area of radio services provided by a base station transceiver, e.g. a NodeB (NB), an eNodeB (eNB), a gNodeB, a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. A base station transceiver may operate multiple sectorized antennas. In the following, a cell may represent an according base station transceiver generating the cell or, likewise, a base station transceiver may represent a cell the base station transceiver generates.

The apparatus 30 may be comprised in a control center, a server, a base station, a NodeB, a UE, a vehicle, a network component, a relay station, or any service coordinating network entity in embodiments. It is to be noted that the term network component may comprise multiple subcomponents, such as a base station, a server, etc.

In embodiments the one or more interfaces 32 may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces 32 may comprise further components to enable according communication in the (mobile) communication system, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The one or more interfaces 32 may be coupled to one or more antennas, which may correspond to any transmit and/or receive antennas, such as horn antennas, dipole antennas, patch antennas, sector antennas etc. In some examples the one or more interfaces 32 may serve the purpose of transmitting or receiving or both, transmitting and receiving, information, such as information, input data, control information, further information messages, etc.

As shown in Fig. 3 the respective one or more interfaces 32 are coupled to the respective control module 34 at the apparatus 30. In embodiments the control module 34 may be implemented using one or more processing units, one or more processing devices, any means for processing, such as a processor, a computer or a programmable hardware component being operable with accordingly adapted software. In other words, the described functions of the control module 34 may as well be implemented in software, which is then executed on one or more programmable hardware components. Such hardware components may comprise a general-purpose processor, a Digital Signal Processor (DSP), a micro-controller, etc.

In embodiments, communication, i.e. transmission, reception or both, may take place among mobile transceivers/vehicles directly, e.g. forwarding input data or control information to/from a control center. Such communication may make use of a mobile communication system. Such communication may be carried out directly, e.g. by means of Device-to-Device (D2D) communication. Such communication may be carried out using the specifications of a mobile communication system. An example of D2D is direct communication between vehicles, also referred to as Vehicle-to-Vehicle communication (V2V), car-to-car, Dedicated Short Range Communication (DSRC), respectively. Technologies enabling such D2D-communication include 802.11p, 3GPP systems (4G, 5G, NR and beyond), etc.

In embodiments, the one or more interfaces 32 can be configured to wirelessly communicate in the mobile communication system, e.g. in an embodiment in which the apparatus 30 is implemented in a vehicle 300 and the method 10 is carried out at the vehicle 300, while another apparatus 30 is implemented at a control center 400 and the method 20 is carried out at the control center. In order to do so radio resources are used, e.g. frequency, time, code, and/or spatial resources, which may be used for wireless communication with a base station transceiver as well as for direct communication. The assignment of the radio resources may be controlled by a base station transceiver, i.e. the determination which resources are used for D2D and which are not. Here and in the following radio resources of the respective components may correspond to any radio resources conceivable on radio carriers and they may use the same or different granularities on the respective carriers. The radio resources may correspond to a Resource Block (RB as in LTE/LTE-A/LTE-unlicensed (LTE-U)), one or more carriers, sub-carriers, one or more radio frames, radio sub-frames, radio slots, one or more code sequences potentially with a respective spreading factor, one or more spatial resources, such as spatial sub-channels, spatial precoding vectors, any combination thereof, etc. For example, in direct Cellular Vehicle-to-Anything (C-V2X), where V2X includes at least V2V, V2-Infrastructure (V2I), etc., transmission according to 3GPP Release 14 onward can be managed by infrastructure (so-called mode 3) or run in a UE.

For example, a first automated vehicle (AV) is in a deadlock situation. Multiple AVs were following it and are also stopping. If each AV detects its own deadlock situation, a cascade of ToO session requests is created, which would lead to an overload of the CC support system. The AV are then in a queue or arrive at subsequent time instances and solve the deadlock situation. That way, an overhead occurs, for example, as each new ToO session requires the CC to acquire a new understanding of the same scene.

Embodiments may provide methods 10, 20 to optimize a ToD command center assignment using cellular V2X and a database. When a CC is connected to an AV in order to solve a deadlock situation, the human operator may require some time to get a full understanding of the situation before being able to solve it. In the future a computer would take over this task at the command center. Even an AI (artificial intelligence) within a powerful computer might require further information in order to be able to solve such situations, e.g. video footage from infrastructure.

If multiple AVs get blocked in the same deadlock situation, this situation understanding time becomes redundant. This total deadlock solving time starts at the deadlock detection and lasts to the deadlock solving, i.e. it contains the situation understanding time. Embodiments may assign the same command center operator for the same deadlock situation to reduce this situation understanding time. The assignment method may be based on the registration of the following elements in a backend database (DB):
1. the geographical localization of the deadlock situation, e.g. the GPS (global positioning system) coordinates;
2. the identification number of the CC;
3. the timestamp of last deadlock situation solving.

This may be particularly advantageous in a rural environment where AVs might not be able to communicate through V2V. Embodiments may reduce the overhead of understanding the situation. Indeed, once the CC operator has solved the problem for the first vehicle, it can use its acquired knowledge to solve the same problem for the following vehicles in a reduced time. The steps are the following:
1. A first AV (AV1) detects a deadlock situation and triggers a ToO session request through cellular V2X, and transmits its position (P1 as reference location) and the current timestamp (T1);
2. The CC operator (CCO1) solves the deadlock situation through remote control, and registers in the DB its identification number (CCO1), the localization of the AV (P1) as well as the current timestamp (T1);
3. A second AV (AV2) arrives later at the same deadlock situation and triggers a ToO session request through cellular V2X, and transmits its position (P2) and the current timestamp (T2);
4. The CC dispatcher (CCD) checks the database for a position PX close to P2 and finds the tuple (P1, T1, ID1). Therefore, the CCD is performing coordinate matching. The checking of the data base is based on the information on the reference location of the deadlock traffic situation;
5. As T2-T1 < T₀, a timeout, CCD assigns CCO1 to solve the deadlock situation of AV2. The method 20 hence comprises determining a time stamp for the information received from the automatically operated vehicle and comparing the time stamp with a time indication of the information on the deadlock traffic situation to determine outdated information;
6. Once the situation is solved, the database is updated to reflect the new timestamp T2. In some embodiments the method 20 hence comprises updating the information on the deadlock traffic situation in case it is outdated by determining update information on the deadlock traffic situation in the tele-operated driving session;
7. A third AV (AV3) arrives much later at the same deadlock situation and triggers a ToO session request through cellular V2X, and transmits its position (P3) and the current timestamp (T3);
8. As T3-T2 > T₀, CCD assigns any CCO2 to solve the deadlock situation. The method 20 hence comprises determining a time stamp for the information received from the automatically operated vehicle and comparing the time stamp with a time indication of the information on the deadlock traffic situation to determine outdated information.

The timeout T₀ is designed to reflect the fact that:
- CC1 may have solved many other situations in the meantime and lost its good understanding of the situation;
- The deadlock situation may have changed in the meantime.

As already mentioned, in embodiments the respective methods may be implemented as computer programs or codes, which can be executed on a respective hardware. Hence, another embodiment is a computer program having a program code for performing at least one of the above methods, when the computer program is executed on a computer, a processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers, for example, positions of slots may be determined or calculated. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method (20) for resolving a deadlock traffic situation of an automatically operated vehicle at a control center (400), the method (20) comprising
receiving (21) information requesting tele-operation support from the automatically operated vehicle (300), the information requesting the tele-operation support further comprising information on a reference location for the deadlock traffic situation;
determining (22) whether information on the deadlock traffic situation is already available;
determining, if the information on the deadlock traffic situation is available, a time stamp for the information received from the automatically operated vehicle (300) and comparing the time stamp with a time indication of the information on the deadlock traffic situation to determine if the available information on the deadlock traffic situation is outdated; and
**characterized in that** the method further comprising:
assigning, to solve the deadlock situation, a first control center, CC, operator that solved the deadlock traffic situation related to the available and not outdated information on the deadlock traffic situation or a second CC operator if the information on the deadlock traffic situation is outdated.

2. The method (20) of claim 1, further comprising generating and storing information on the deadlock traffic situation in a data base, if the information on the deadlock traffic situation is not available.

3. The method (20) of claim 2, wherein the data base is accessible from multiple control centers, CCs.

4. The method (20) of claim 2 or 3, further comprising storing information on a time indication with the information on the deadlock traffic situation.

5. The method (20) of any one of claims 1 to 4, wherein the determining (22) whether information on the deadlock traffic situation is available comprises checking a data base for the information on the deadlock traffic situation.

6. The method (20) of claim 5, wherein the checking of the data base is based on the information on the reference location of the deadlock traffic situation.

7. The method (20) of any one of claims 1 to 6, further comprising updating the information on the deadlock traffic situation in case the information on the deadlock traffic situation is outdated by determining update information on the deadlock traffic situation in the tele-operated driving session.

8. A computer program having a program code for performing at least one of the methods (20) of claims 1 to 7, when the computer program is executed on a computer, a processor, or a programmable hardware component.

9. An apparatus (30) for resolving a deadlock traffic situation of a vehicle (300), the apparatus (300) comprising
one or more interfaces (32) configured to communicate in a communication network; and
a control module (34) configured to control the one or more interfaces (32), wherein the control module (34) is further configured to perform one of the methods (20) of claims 1 to 7.

10. A control center (400) comprising the apparatus (30) of claim 9.

## Patentansprüche

1. Verfahren (20) zum Beheben einer Verkehrsstillstandsituation eines automatisch betriebenen Fahrzeugs in einem Steuerzentrum (400), wobei das Verfahren (20) Folgendes umfasst:
Empfangen (21) von Informationen, die eine Teleoperationsunterstützung anfordern, von dem automatisch betriebenen Fahrzeug (300), wobei die die Teleoperationsunterstützung anfordernden Informationen ferner Informationen über einen Bezugsort für die Verkehrsstillstandsituation umfassen;
Bestimmen (22), ob Informationen über die Verkehrsstillstandsituation bereits verfügbar sind;
Bestimmen, falls die Informationen über die Verkehrsstillstandsituation verfügbar sind, eines Zeitstempels für die Informationen, die vom automatisch betriebenen Fahrzeug (300) empfangen wurden, und Vergleichen des Zeitstempels mit einer Zeitangabe der Informationen über die Verkehrsstillstandsituation, um zu bestimmen, ob die verfügbaren Informationen über die Verkehrsstillstandsituation veraltet sind;
**dadurch gekennzeichnet, dass** das Verfahren ferner umfasst:
Zuweisen, um die Stillstandsituation zu lösen, eines ersten Steuerzentrumsbetreibers, CC-Betreibers, der die Verkehrsstillstandsituation, die mit den verfügbaren und nicht veralteten Informationen über die Verkehrsstillstandsituation in Beziehung steht, gelöst hat, oder eines zweiten CC-Betreibers, falls die Informationen über die Verkehrsstillstandsituation veraltet sind.

2. Verfahren (20) nach Anspruch 1, das ferner ein Erzeugen der Informationen über die Verkehrsstillstandsituation und ein Speichern in einer Datenbank umfasst, falls die Informationen über die Verkehrsstillstandsituation nicht verfügbar sind.

3. Verfahren (20) nach Anspruch 2, wobei auf die Datenbank von mehreren Steuerzentren, CCs, zugegriffen werden kann.

4. Verfahren (20) nach Anspruch 2 oder 3, das ferner ein Speichern von Informationen über eine Zeitangabe mit den Informationen über die Verkehrsstillstandsituation umfasst.

5. Verfahren (20) nach einem der Ansprüche 1 bis 4, wobei das Bestimmen (22), ob Informationen über die Verkehrsstillstandsituation verfügbar sind, ein Prüfen einer Datenbank hinsichtlich der Informationen über die Verkehrsstillstandsituation umfasst.

6. Verfahren (20) nach Anspruch 5, wobei das Prüfen der Datenbank auf den Informationen über den Bezugsort der Verkehrsstillstandsituation basiert.

7. Verfahren (20) nach einem der Ansprüche 1 bis 6, das ferner ein Aktualisieren der Informationen über die Verkehrsstillstandsituation durch Bestimmen von Aktualisierungsinformationen über die Verkehrsstillstandsituation in der durch Teleoperation bedienten Fahrsitzung umfasst, falls die Informationen über die Verkehrsstillstandsituation veraltet sind.

8. Computerprogramm, das einen Programmcode zum Durchführen mindestens eines der Verfahren (20) nach den Ansprüchen 1 bis 7 aufweist, wenn das Computerprogramm in einem Computer, einem Prozessor oder einer programmierbaren Hardware-Komponente ausgeführt wird.

9. Vorrichtung (30) zum Beheben einer Verkehrsstillstandsituation eines Fahrzeugs (300), wobei die Vorrichtung (300) Folgendes umfasst:
eine oder mehrere Schnittstellen (32), die konfiguriert sind, in einem Kommunikationsnetz zu kommunizieren; und
ein Steuermodul (34), das konfiguriert ist, die eine oder die mehreren Schnittstellen (32) zu steuern, wobei das Steuermodul (34) ferner konfiguriert ist, eines der Verfahren (20) nach den Ansprüchen 1 bis 7 durchzuführen.

10. Steuerzentrum (400), das die Vorrichtung (30) nach Anspruch 9 umfasst.

## Revendications

1. Procédé (20) de résolution, dans un centre de commande (400), d'une situation d'interblocage de la circulation associée à un véhicule à commande automatique, le procédé (20) comprenant
la réception (21) d'informations demandant une aide à la téléopération depuis le véhicule à commande automatique (300), les informations demandant l'aide à la téléopération comprenant en outre des informations sur un lieu de référence pour la situation d'interblocage de la circulation ;
la détermination (22) si des informations sur la situation d'interblocage de la circulation sont déjà disponibles ou non ;
la détermination, si les informations sur la situation d'interblocage de la circulation sont disponibles, d'un horodatage pour les informations reçues depuis le véhicule à commande automatique (300) et la comparaison de l'horodatage à une indication temporelle des informations sur la situation d'interblocage de la circulation pour déterminer si les informations disponibles sur la situation d'interblocage de la circulation sont obsolètes ; et
le procédé étant **caractérisé en ce qu'**il comprend en outre :
l'assignation, dans le but de résoudre la situation d'interblocage, d'un premier opérateur de centre de commande, CC, qui a résolu la situation d'interblocage de la circulation relative aux informations disponibles et non obsolètes sur la situation d'interblocage de la circulation ou d'un deuxième opérateur de CC si les informations sur la situation d'interblocage de la circulation sont obsolètes.

2. Procédé (20) selon la revendication 1, comprenant en outre la génération et le stockage d'informations sur la situation d'interblocage de la circulation dans une base de données, si les informations sur la situation d'interblocage de la circulation ne sont pas disponibles.

3. Procédé (20) selon la revendication 2, la base de données étant accessible depuis de multiples centres de commande, CC.

4. Procédé (20) selon la revendication 2 ou 3, comprenant en outre le stockage d'informations sur une indication temporelle avec les informations sur la situation d'interblocage de la circulation.

5. Procédé (20) selon l'une quelconque des revendications 1 à 4, la détermination (22) si des informations sur la situation d'interblocage de la circulation sont disponibles ou non comprenant la recherche, dans une base de données, des informations sur la situation d'interblocage de la circulation.

6. Procédé (20) selon la revendication 5, la recherche dans la base de données étant basée sur les informations sur le lieu de référence de la situation d'interblocage de la circulation.

7. Procédé (20) selon l'une quelconque des revendications 1 à 6, comprenant en outre la mise à jour des informations sur la situation d'interblocage de la circulation dans le cas où les informations sur la situation d'interblocage de la circulation sont obsolètes par détermination d'informations de mise à jour sur la situation d'interblocage de la circulation dans la session de conduite téléopérée.

8. Programme d'ordinateur doté d'un code de programme pour réaliser au moins un des procédés (20) selon les revendications 1 à 7, lorsque le programme d'ordinateur est exécuté sur un ordinateur, un processeur, ou un composant matériel programmable.

9. Appareil (30) de résolution d'une situation d'interblocage de la circulation associée à un véhicule (300), l'appareil (300) comprenant
une ou plusieurs interfaces (32) configurées pour communiquer dans un réseau de communication ; et
un module de commande (34) configuré pour commander les une ou plusieurs interfaces (32), le module de commande (34) étant configuré en outre pour réaliser l'un des procédés (20) selon les revendications 1 à 7.

10. Centre de commande (400), comprenant l'appareil (30) selon la revendication 9.
